# EUROPEAN PATENT SPECIFICATION

(11) **EP 3 974 209 B1**
(45) Date of publication and mention of the grant of the patent: **30.04.2025**
(21) Application number: 21192510.2
(22) Date of filing: 23.08.2021
(51) Int. Cl.: B60C 11/12

(54) **TIRE**
REIFEN
PNEUMATIQUE

(30) Priority: 23.09.2020 JP 2020158827
(43) Date of publication of application: 30.03.2022
(73) Proprietor: Sumitomo Rubber Industries, Ltd., Kobe-shi, Hyogo 651-0072 (JP)
(72) Inventor: HOSHINO, Madoka, Kobe-shi, 651-0072 (JP); ISHIGAKI, Yuichi, Kobe-shi, 651-0072 (JP)
(74) Representative: TBK

(56) References cited:
- EP-A1- 2 465 709
- WO-A1-2008/065947
- WO-A1-2019/123561
- JP-A- 2002 316 517
- JP-A- 2004 262 285
- JP-A- 2010 064 699
- JP-A- 2017 185 851
- US-A1- 2011 277 896
- US-A1- 2011 315 290
- US-A1- 2015 191 051

## Description

### Technical Field

The invention relates to a tire.

### Description of Related Art

JP H11 105512 A describes a pneumatic tire in which sipes are formed on a ground-contacting part. On at least one surface of groove wall surfaces of the sipe, protrusions that come into contact with the other opposite surface are formed. It is said that this type of protrusion contacts the opposite wall surface when the ground-contacting part touches the road surface to suppress the displacement between the wall surfaces and suppresses uneven wear.

JP 2010 064699 A, JP 2017 185851 A, US 2011/315290 A1, and US 2015/191051 A1 disclose sipes having hemispherical protrusions. JP 2017 185851 A also discloses protrusions with cylindrical base parts and truncated cone-shaped tip parts.

WO 2008/065947 A1 discloses conical protrusions with pointed ends. WO 2019/123561 A1 discloses protrusions with a trapezoid shape. US 2011/277896 A1 discloses protrusions including portions with a cylindrical shape and ends with a truncated conical shape. JP 2004 262285 A discloses protrusions with truncated cone-shaped taper parts and tip parts protruding from the taper parts in a cylindrical shape.

JP 2002 316517 A discloses a tire as specified in the preamble of claim 1. A protrusion has a truncated cone shape and protrudes at a taper angle of 10 to 30 degrees, preferably 12 to 20 degrees from one sipe wall toward the other sipe wall. An area of an upper surface of the protrusion is 2 to 20 mm², and a distance between the pair of sipe walls facing each other is 0.3 to 1.0 mm, preferably 0.3 to 0.8 mm.

EP 2 465 709 A1 also discloses a tire as specified in the preamble of claim 1. A sipe wall has a recess to be engaged with a protrusion. A base diameter of a truncated cone forming the recess is 3 to 7 mm, and a tip diameter is 1 to 7 mm but at least 10% smaller than the base diameter.

For example, in order to improve on-ice performance, winter studless tires and the like are provided with a plurality of sipes in blocks divided by lateral grooves. Each of the sipes is arranged in the thickness direction thereof. In recent years, in such tires, it has been required to suppress wear of the blocks.

### SUMMARY

The invention has been made in view of the above circumstances, and provides a tire capable of improving the wear resistance without impairing the on-ice performance.

The invention provides a tire as specified in claim 1.

In the tire according to the invention, the pair of sipe walls include a first sipe wall on one side in the thickness direction and a second sipe wall on the other side in the thickness direction, and the protrusion of each of the plurality of sipes protrudes from the first sipe wall toward the second sipe wall. A taper shape of the protrusion is a truncated cone shape. A maximum cross-sectional area of the protrusion is greater than or equal to 1 mm² and is less than or equal to 5.00 mm². A ratio (Sb/Sa) of a minimum cross-sectional area Sb of the protrusion to the maximum cross-sectional area Sa of the protrusion is 0.5 to 0.8.

In the tire according to the invention, the protrusion is provided on only one of the pair of sipe walls and no protrusion is provided on the other of the pair of sipe walls.

In the tire according to the invention, it is preferable that a cross section of the protrusion is circular.

In the tire according to the invention, it is preferable that the protrusion is one of a plurality of the protrusions provided on the one of the pair of sipe walls.

### Effects

The tire of the invention is capable of improving the wear resistance without impairing the on-ice performance by adopting the above configurations.

### BRIEF DESCRIPTION OF THE DRAWINGS

FIG. 1 is an enlarged plan view showing an embodiment of a tread part of a tire of the invention.
FIG. 2 is a cross-sectional perspective view taken along the line A-A of FIG. 1.
FIG. 3 is a cross-sectional view of the sipe of this embodiment.
FIG. 4 is a plan view of the block having the sipe of another embodiment.
In FIG. 5, (a) is a perspective view of a part of a vulcanization mold for forming the sipe, and (b) is a cross-sectional view of the knife blade of (a).
In FIG. 6, (a) and (b) are cross-sectional views of the knife blade for describing a method of molding the sipe of the embodiment.

### DESCRIPTION OF THE EMBODIMENTS

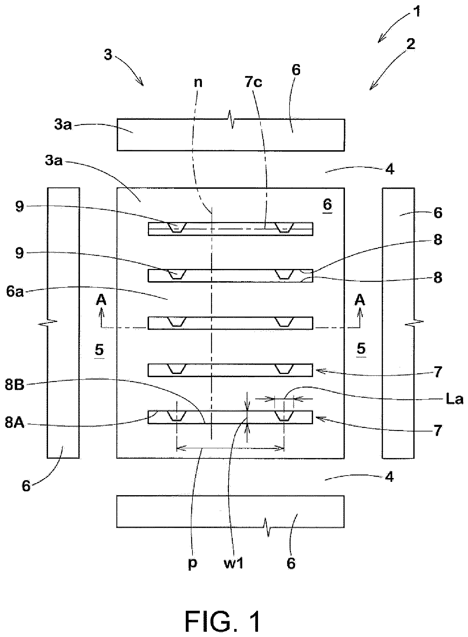

Hereinafter, embodiments of the invention will be described with reference to the drawings. FIG. 1 is an enlarged plan view of a tread part 2 of a tire 1 showing an embodiment of the invention. The tire 1 of the embodiment is, for example, a pneumatic tire for a passenger vehicle, particularly for a passenger vehicle suitable for running in winter. However, the invention is also adopted for pneumatic tires for heavy loads and non-pneumatic tires in which compressed air is not filled.

As shown in FIG. 1, the tread part 2 of the embodiment is provided with a ground-contacting part 3 and a lateral groove 4. Further, the tread part 2 may be provided with, for example, a vertical groove 5. The ground-contacting part 3 has a tread surface 3a in contact with the road surface. The lateral groove 4 extends in the tire axial direction. The vertical groove 5 extends in the tire circumferential direction. "Extending in the tire axial direction" means extending at an angle of less than or equal to 45 degrees with respect to the tire axial direction. Further, "extending in the tire circumferential direction" means extending at an angle of greater than 45 degrees with respect to the tire axial direction.

The ground-contacting part 3 of the embodiment is provided with a plurality of blocks 6 divided by the lateral groove 4. The blocks 6 are arranged, for example, in the tire circumferential direction. In addition, the blocks 6 may be arranged in the tire axial direction. In the embodiment, the block 6 is divided by a pair of lateral grooves 4 separated in the tire circumferential direction and a pair of vertical grooves 5 separated in the tire axial direction. In addition, the block 6 is not limited to such an implementation, and various implementations are adopted.

At least one of the plurality of blocks 6 is provided with a plurality of sipes 7. The sipe 7 is a notched recess having a width w1 of less than or equal to 1.5 mm, and can be clearly distinguished from the lateral groove 4 and the vertical groove 5 having a groove width of greater than 1.5 mm. Further, the plurality of sipes 7 means two or more sipes 7, and for example, about two to five sipes 7 are preferable.

Unless otherwise specified, the dimensions and the like of each part of the tire 1 are values measured in a regular state. The "regular state" is a no-load state in which the tire 1 is rim-assembled on a regular rim (not shown) and is filled with a regular internal pressure.

The "regular rim" is a rim defined for each tire in a standard system including a standard on which the tire 1 is based, and is, for example, a standard rim in the case of JATMA, a "Design Rim" in the case of TRA, and a "Measuring Rim" in the case of ETRTO.

The "regular internal pressure" is an air pressure defined for each tire in a standard system including a standard on which the tire 1 is based, and is the maximum air pressure in the case of JATMA, the maximum value described in the "TIRE LOAD LIMITS AT VARIOUS COLD INFLATION PRESSURES" table in the case of TRA, and the "INFLATION PRESSURE" in the case of ETRTO.

The plurality of sipes 7 are arranged in a thickness direction (width direction) of the sipes 7. As a result, the block 6 exhibits a high edge effect and has excellent on-ice performance. The "thickness direction" is a direction orthogonal to a center line 7c of the sipe 7. Being "arranged in the thickness direction" means that other sipes 7 are arranged on a virtual straight line n orthogonal to the center line 7c of one sipe 7.

Each sipe 7 has a pair of sipe walls 8 that are separated in the thickness direction. The pair of sipe walls 8 include a first sipe wall 8A on one side in the thickness direction (upper side in the drawing) and a second sipe wall 8B on the other side in the thickness direction (lower side in the drawing).

Each sipe 7 includes a protrusion 9 that protrudes in a taper shape from one toward the other of the pair of sipe walls 8. Such a protrusion 9 is able to immediately contact the other sipe wall 8 when the block 6 touches the ground, suppress a block piece 6a between the sipes 7 from collapsing or slipping, and improve the wear resistance of the block 6 while exhibiting good on-ice performance. Further, since such a protrusion 9 alleviates the impact at the time of touching the ground and suppresses chipping and the like, the wear resistance is further improved. In the embodiment, each protrusion 9 of each sipe 7 protrudes from the first sipe wall 8A toward the second sipe wall 8B.

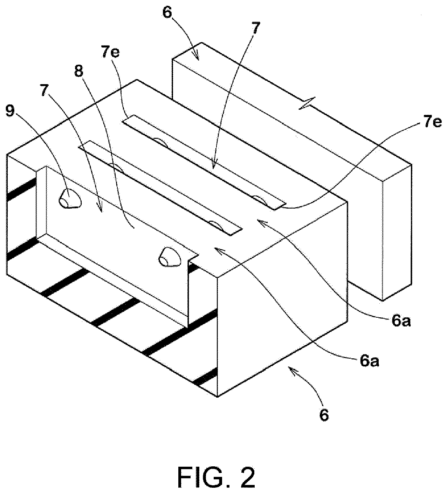

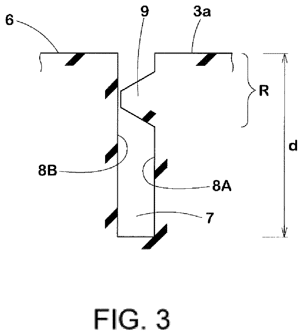

FIG. 2 is a cross-sectional perspective view taken along the line A-A of FIG. 1. FIG. 3 is a cross-sectional view of the sipe 7. As shown in FIGs. 1 to 3, in the embodiment, the protrusion 9 is provided on only one of the pair of sipe walls 8. The protrusion 9 is provided on, for example, only the first sipe wall 8A. In addition, the protrusion 9 may be provided on only the second sipe wall 8B.

The cross-sectional area S of the protrusion 9 is greater than or equal to 1.0 mm². In this way, the effect of suppressing the collapse of the block 6 is well achieved. The cross-sectional area S of the protrusion 9 is less than or equal to 5.0 mm². If the cross-sectional area S of the protrusion 9 is greater than 5.0 mm², the suction amount of melted water on the ice road into the sipe 7 becomes small, and the on-ice performance may deteriorate. From this point of view, the cross-sectional area S of the protrusion 9 is preferably greater than or equal to 1.5 mm², and preferably less than or equal to 3.5 mm². The protrusion 9 is required to have a maximum cross-sectional area Sa of greater than or equal to 1.0 mm².

The ratio (Sb/Sa) of the minimum cross-sectional area Sb of the protrusion 9 to the maximum cross-sectional area Sa of the protrusion 9 is 0.5 to 0.8. Since the ratio (Sb/Sa) is greater than or equal to 0.5, the collapse of the block is suppressed. Since the ratio (Sb/Sa) is less than or equal to 0.8, a high suction amount of the water is ensured. In the embodiment, the maximum cross-sectional area Sa is formed on the first sipe wall 8A. In other words, the maximum cross-sectional area Sa is formed at the base of the protrusion 9. In the embodiment, the minimum cross-sectional area Sb is formed closest to the second sipe wall 8B side on the protrusion 9. In other words, the minimum cross-sectional area Sb is formed at the tip of the protrusion 9.

A plurality of the protrusions 9 are provided on, for example, one sipe wall 8. In this way, the collapse of the block 6 may be further suppressed. In the embodiment, each protrusion 9 is provided on only the first sipe wall 8A. Two protrusions 9 are provided on the first sipe wall 8A.

The ratio (p/La) of the pitch p between the protrusions 9 to the length La of the protrusion 9 is preferably greater than or equal to 2, more preferably greater than or equal to 4, and preferably less than or equal to 10, and more preferably less than or equal to 6. In this way, the wear resistance and the on-ice performance are improved in a well-balanced manner. The length La of the protrusion 9 is the length along the longitudinal direction of the sipe 7.

In the embodiment, the protrusion 9 has a substantially truncated cone shape. In this way, since the rigidity of the protrusion 9 can be maintained high, good wear resistance can be exhibited. The cross section of the protrusion 9 is, for example, circular. The term "circular" includes a circular shape or an elliptical shape. In the embodiment, the cross section of the protrusion 9 is formed in an elliptical shape. The cross section of the protrusion 9 is, for example, an elliptical shape whose major axis is arranged parallel to the longitudinal direction of the sipe 7. In addition, the protrusion 9 may have an elliptical shape whose major axis is arranged parallel to the depth direction of the sipe 7 (not shown).

In the embodiment, the protrusion 9 is provided on the tread surface 3a side with respect to the bottom of the sipe 7. In this way, when the block 6 touches the ground, the collapse or slippage of the block piece 6a may be firmly suppressed. From this point of view, it is preferable that the disposition position of the protrusion 9 is in a region R of 25% of the depth d of the sipe 7 from the tread surface 3a to the bottom side of the sipe 7.

In the embodiment, each sipe 7 extends in the tire axial direction. Each sipe 7 extends, for example, parallel to the lateral groove 4. In each sipe 7, for example, ends 7e on both sides are arranged within the block 6. Each sipe 7 is not limited to such an implementation, and may cross the block 6, or may have only one end 7e arranged within the block 6 (not shown).

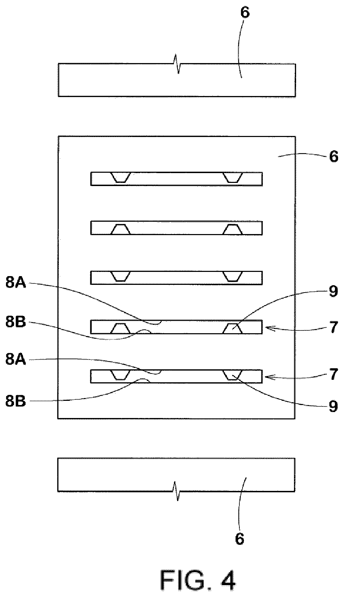

FIG. 4 is a cross-sectional view of the block 6 of another embodiment. The same components as those of the above embodiment are denoted by the same reference numerals, and detailed descriptions thereof will be omitted. As shown in FIG. 4, in this embodiment, the protrusions 9 provided on the sipes 7 adjacent to each other in the thickness direction are arranged in opposite directions. In other words, the protrusion 9 of one sipe 7 is provided on only the first sipe wall 8A, and the protrusion 9 of another sipe 7 adjacent to the one sipe is provided on only the second sipe wall 8B.

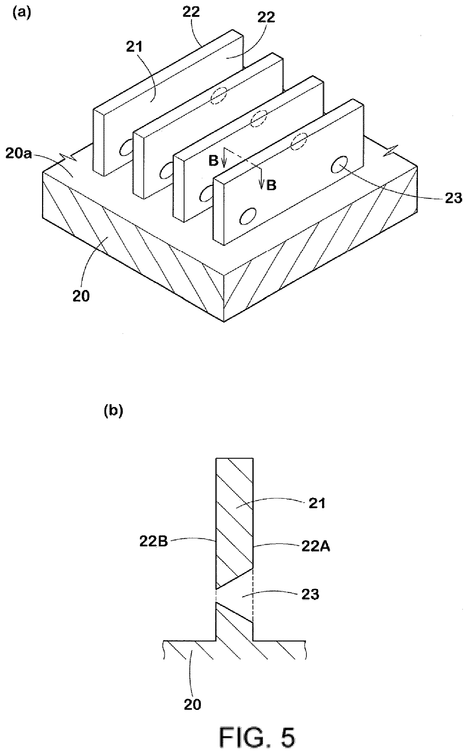

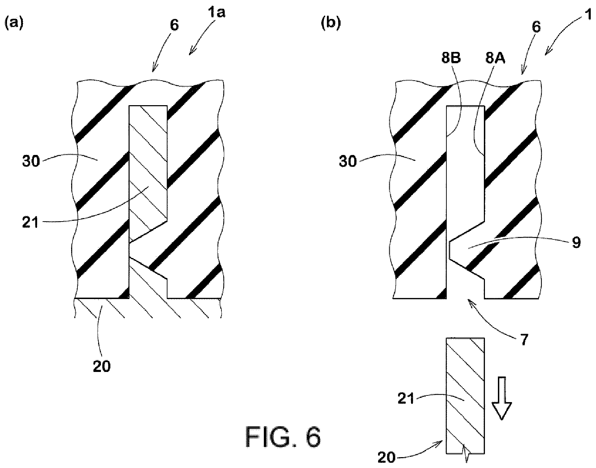

Next, a method for molding such a protrusion 9 will be described. (a) of FIG. 5 is a perspective view of a part of a vulcanization mold 20 for vulcanizing a raw tire 1a (shown in FIG. 6), and (b) of FIG. 5 is a cross-sectional view taken along the line B-B of (a). The tire 1 is formed by vulcanizing the raw tire 1a by using the vulcanization mold 20. As shown in FIG. 5, the vulcanization mold 20 includes a tread molding surface 20a for molding the tread part 2 of the tire 1. The tread molding surface 20a is provided with a thin plate-shaped knife blade 21 for molding the sipe 7. The knife blade 21 protrudes outward from the tread molding surface 20a.

The knife blade 21 of the embodiment has a pair of longitudinal surfaces 22 separated in the width direction and a through hole 23 for forming the protrusion 9. The through hole 23 extends, for example, between the pair of longitudinal surfaces 22.

(a) of FIG. 6 is a cross-sectional view near the knife blade 21 of the raw tire 1a being vulcanized, and (b) of FIG. 6 is a cross-sectional view showing a state where the tire 1 has been detached from the vulcanization mold 20 after vulcanization is completed. As shown in FIG. 6, when the raw tire 1a is put into such a vulcanization mold 20 and an internal pressure is applied, a rubber material 30 forming the block 6 enters the through hole 23. When the vulcanization is completed and the vulcanized tire 1 is separated from the vulcanization mold 20, the rubber material 30 that has entered the through hole 23 is cut by the knife blade 21 to form the protrusion 9.

In order to form the protrusion 9 of the embodiment as shown in FIG. 2, as shown in (b) of FIG. 5, the through hole 23 has a continuously smaller cross-sectional area from one longitudinal surface 22A toward the other longitudinal surface 22B, and has a circular cross section. In other words, the through hole 23 is formed in a truncated cone shape. The ratio (Sd/Sc) of the opening area Sd of the through hole 23 on the other longitudinal surface 22B to the opening area Sc of the through hole 23 on the one longitudinal surface 22A is, for example, preferably greater than or equal to 0.5, more preferably greater than or equal to 0.6, and preferably less than or equal to 0.8, and more preferably less than or equal to 0.7.

Although the particularly preferable embodiments of the invention have been described in detail above, the invention is not limited to the illustrated embodiments, and may be modified into various implementations.

### [Example]

Sample tires having the block shown in FIG. 1 were manufactured. Then, the wear resistance and the on-ice performance of each sample tire were tested. The common specifications and test methods for each sample tire are as follows.
Tire size: 205/55R16
Rim size: 16 x 7.0
Knife blade width (thickness): 0.6 mm
Number of sipes of block: 2

### <Wear resistance>

Each sample tire was mounted on all wheels of a passenger vehicle under the following conditions. Then, after the test driver actually ran the vehicle on a test course on a dry asphalt road surface, the wear condition of the block provided with the sipes was evaluated by senses. The results are shown with a score of 100 for the comparative example. The greater the value, the smaller the wear amount and the better the wear resistance.
Running distance: 20000 km
Internal pressure: 230 kPa

### <On-ice performance>

Using the above test vehicle, the test driver actually ran the vehicle on a test course on an icy road surface, and evaluated the properties related to stability and ease of running at that time by senses. The results are shown with a score of 100 for the comparative example. The greater the value, the better the on-ice performance. The test results are shown in Table 1.

**[Table 1]**

| | Comparative example | Example 1 | Example 2 | Example 3 | Example 4 | Example 5 | Example 6 | Example 7 | Example 8 |
|---|---|---|---|---|---|---|---|---|---|
| Shape of protrusion | Circular column | Taper (truncated cone) | Taper (truncated cone) | Taper (truncated cone) | Taper (truncated cone) | Taper (truncated cone) | Taper (truncated cone) | Taper (truncated cone) | Taper (truncated cone) |
| Figure showing arrangement of protrusion | FIG. 1 | FIG. 1 | FIG. 1 | FIG. 1 | FIG. 1 | FIG. 1 | FIG. 1 | FIG. 5 | FIG. 1 |
| Cross-sectional area S (mm²) of protrusion | 1.5 | 1.5 | 3.0 | 1.5 | 1.5 | 1.5 | 1.5 | 1.5 | 0.78 |
| Sb/Sa (times) | 1.0 | 0.6 | 0.6 | 0.4 | 0.5 | 0.8 | 0.9 | 0.6 | 0.6 |
| Wear resistance [score: the greater the better] | 100 | 120 | 125 | 110 | 120 | 120 | 125 | 115 | 110 |
| On-ice performance [score: the greater the better] | 100 | 110 | 100 | 115 | 110 | 110 | 100 | 120 | 110 |

By the tests, it is understood that the tires of the examples are superior in the wear resistance as compared with the tire of the comparative example. It is also understood that the tires of the examples maintain good on-ice performance. Please note that Examples 3 and 6 are outside the terms of claim 1.

## Claims

1. A tire (1), comprising:
a tread part (2),
wherein the tread part (2) comprises a ground-contacting part (3),
the ground-contacting part (3) is provided with a plurality of blocks (6) divided by a lateral groove (4),
at least one of the plurality of blocks (6) is provided with a plurality of sipes (7),
the plurality of sipes (7) are arranged in a thickness direction of the sipes (7), meaning that other sipes (7) are arranged on a virtual straight line (n) orthogonal to a center line (7c) of one of the plurality of sipes (7), and
each of the plurality of sipes (7) comprises a pair of sipe walls (8) that are separated in the thickness direction, and comprises a protrusion (9) that protrudes in a taper shape from one toward the other of the pair of sipe walls (8), wherein
the taper shape of the protrusion (9) is a truncated cone shape,
**characterized in that**
the protrusion (9) is provided on only one of the pair of sipe walls (8) and no protrusion is provided on the other of the pair of sipe walls (8),
a maximum cross-sectional area of the protrusion (9) is greater than or equal to 1 mm² and is less than or equal to 5 mm², and
a ratio (Sb/Sa) of a minimum cross-sectional area Sb of the protrusion (9) to the maximum cross-sectional area Sa of the protrusion (9) is 0.5 to 0.8.

2. The tire (1) according to claim 1, wherein
the pair of sipe walls (8) comprises a first sipe wall (8A) on one side in the thickness direction and a second sipe wall (8B) on the other side in the thickness direction, and
the protrusion (9) of each of the plurality of sipes (7) protrudes from the first sipe wall (8A) toward the second sipe wall (8B).

3. The tire (1) according to claim 1, wherein a cross section of the protrusion (9) is circular.

4. The tire (1) according to claim 1, wherein the protrusion is one of a plurality of the protrusions (9) provided on the one of the pair of sipe walls (8).

## Patentansprüche

1. Reifen (1) mit:
einem Laufflächenteil (2),
wobei der Laufflächenteil (2) einen bodenberührenden Teil (3) umfasst,
der bodenberührende Teil (3) mit einer Vielzahl von Blöcken (6) versehen ist, die durch eine seitliche Rille (4) unterteilt sind,
mindestens einer der Vielzahl von Blöcken (6) mit einer Vielzahl von Lamellen (7) versehen ist,
die Vielzahl von Lamellen (7) in einer Dickenrichtung der Lamellen (7) angeordnet sind, was bedeutet, dass andere Lamellen (7) auf einer gedachten Geraden (n) angeordnet sind, die orthogonal zu einer Mittellinie (7c) von einer der Vielzahl von Lamellen (7) ist, und
jede der Vielzahl von Lamellen (7) ein Paar Lamellenwände (8) umfasst, die in der Dickenrichtung getrennt sind, und einen Vorsprung (9) umfasst, der in einer Kegelform von einer zur anderen der beiden Lamellenwände (8) vorsteht, wobei
die Kegelform des Vorsprungs (9) eine Kegelstumpfform ist,
**dadurch gekennzeichnet, dass**
der Vorsprung (9) nur auf einer der beiden Lamellenwände (8) vorgesehen ist und kein Vorsprung auf der anderen der beiden Lamellenwände (8) vorgesehen ist,
eine maximale Querschnittsfläche des Vorsprungs (9) größer oder gleich 1 mm² ist und kleiner oder gleich 5 mm² ist und
ein Verhältnis (Sb/Sa) einer minimalen Querschnittsfläche Sb des Vorsprungs (9) zur maximalen Querschnittsfläche Sa des Vorsprungs (9) 0,5 bis 0,8 beträgt.

2. Reifen (1) nach Anspruch 1, wobei
das Paar Lamellenwände (8) eine erste Lamellenwand (8A) auf einer Seite in der Dickenrichtung und eine zweite Lamellenwand (8B) auf der anderen Seite in der Dickenrichtung umfasst und
der Vorsprung (9) von jeder der Vielzahl von Lamellen (7) von der ersten Lamellenwand (8A) zur zweiten Lamellenwand (8B) vorsteht.

3. Reifen (1) nach Anspruch 1, wobei ein Querschnitt des Vorsprungs (9) kreisförmig ist.

4. Reifen (1) nach Anspruch 1, wobei der Vorsprung einer von einer Vielzahl der Vorsprünge (9) ist, die auf der einen der beiden Lamellenwände (8) vorgesehen sind.

## Revendications

1. Pneu (1), comprenant :
une partie de bande de roulement (2),
dans lequel la partie de bande de roulement (2) comprend une partie de contact avec le sol (3),
la partie de contact avec le sol (3) est pourvue d'une pluralité de blocs (6) divisés par une rainure latérale (4),
au moins une de la pluralité de blocs (6) est pourvu d'une pluralité de lamelles (7),
la pluralité de lamelles (7) est disposée dans une direction d'épaisseur des lamelles (7), ce qui signifie que d'autres lamelles (7) sont disposées sur une ligne droite virtuelle (n) orthogonale à une ligne centrale (7c) de l'une de la pluralité de lamelles (7), et
chacune de la pluralité de lamelles (7) comprend une paire de parois de lamelles (8) qui sont séparées dans la direction de l'épaisseur, et comprend une protubérance (9) qui fait saillie en forme de cône de l'une vers l'autre de la paire de parois de lamelles (8), dans laquelle
la forme de cône de la protubérance (9) est une forme de cône tronqué,
**caractérisé en ce que**
la protubérance (9) n'est prévue que sur l'une de la paire de parois de lamelles (8) et aucune protubérance n'est prévue sur l'autre de la paire de parois de lamelles (8),
une surface de section transversale maximale de la protubérance (9) est supérieure ou égale à 1 mm² et inférieure ou égale à 5 mm², et
un rapport (Sb/Sa) entre une surface de section transversale minimale Sb de la protubérance (9) et la surface de section transversale maximale Sa de la protubérance (9) est de 0,5 à 0,8.

2. Pneu (1) selon la revendication 1, dans lequel
la paire de parois de lamelles (8) comprend une première paroi de lamelles (8A) d'un côté dans la direction de l'épaisseur et une seconde paroi de lamelles (8B) de l'autre côté dans la direction de l'épaisseur, et
la protubérance (9) de chacune de la pluralité de lamelles (7) fait saillie de la première paroi de lamelles (8A) vers la seconde paroi de lamelles (8B).

3. Pneu (1) selon la revendication 1, dans lequel une section transversale de la protubérance (9) est circulaire.

4. Pneu (1) selon la revendication 1, dans lequel la protubérance fait partie d'une pluralité de protubérances (9) prévues sur l'une de la paire de parois de lamelles (8).
